# EUROPÄISCHE PATENTSCHRIFT

(11) **EP 2 052 807 B1**
(45) Veröffentlichungstag und Bekanntmachung des Hinweises auf die Patenterteilung: **15.12.2010**
(21) Anmeldenummer: 07119238.9
(22) Anmeldetag: 25.10.2007
(51) Int. Cl.: B23P 21/00, G05B 19/042

(54) **Montagearbeitsplatz**
Assembly workstation
Poste de travail de montage

(43) Veröffentlichungstag der Anmeldung: 29.04.2009
(73) Patentinhaber: iie Gesellschaft für innovative Industrieelektronik mbH, 83564 Soyen (DE)
(72) Erfinder: Kress, Ekkehard, 83512, Wasserburg am Inn (DE)
(74) Vertreter: Oberhardt, Knut

(56) Entgegenhaltungen:
- WO-A2-2007/044558
- DE-A1- 10 320 557
- GB-A- 2 327 289
- JP-A- 9 262 745
- JP-A- 2005 262 365
- US-A1- 2006 249 649

## Beschreibung

Die Erfindung betrifft einen Montagearbeitsplatz nach dem Oberbegriff nach Anspruch 1. Ein solches Montagearbeitsplatz ist aus der WO 2007/044558 bekannt.

Bei der Großserienmontage wird heute mit hoher Effizienz gearbeitet. Das bedeutet, dass kurze Montagezeiten erreicht werden und eine hohe Qualität reproduzierbar ist. Die Montage in der Großserie wird in vielen Bereichen bereits vollautomatisch durchgeführt. Dabei kommen meist Industrieroboter zum Einsatz, die in unterschiedlicher Weise programmiert werden und den entsprechenden Montageschritt selbstständig ausführen. Abhängig von den zu montierenden Geräten wird jedoch auch noch halbautomatisch montiert. Hier sind Werker einem Fließband zugeordnet, wobei jeder Werker immer wieder den selben Montageschritt ausführt. Bei einer Großserienmontage amortisiert sich aufgrund der hohen Stückzahl eine längere Anlernphase, in der dem jeweiligen Werker der von ihm durchzuführende Montageschritt intensiv antrainiert wird. Dies führt - ähnlich wie bei der vollautomatischen Montage - zu einer kurzen Montagezeit und einer hohen Reproduzierbarkeit.

Bei Kleinserien würde sich ein entsprechender Aufwand nicht amortisieren, da sich die Trainingszeiten nur auf eine wesentlich geringere Stückzahl verteilen lassen. Auch ist es nicht möglich, für jeden Montageschritt einen Werker zu beschäftigen. Es werden daher von jedem Werker meist mehrere Montageschritte durchgeführt. Trotzdem muss die Anlernphase für jeden Montageschritt kürzer gehalten werden. Dies führt meist zu einer, gegenüber der Großserie, erhöhten Fehlerquote. Die Kosten für die fehlerhaften Geräte müssen auf die verkaufbaren Geräte umgelegt werden und erhöhen so deren Herstellungskosten.

Der Erfindung liegt die Aufgabe zugrunde, einen Montageplatz für die Kleinserienfertigung nach dem Oberbegriff von Anspruch 1 so auszugestalten, dass eine mit der Großserienfertigung vergleichbare Qualität, Montagezeit und Reproduzierbarkeit erreichbar ist.

Gelöst wird die Aufgabe gemäß der Erfindung durch einen Montagearbeitsplatz für die Kleinserienfertigung mit den Merkmalen von Anspruch 1. Erfindungsgemäß stehen mit der Montagesteuerung ein Display zur Visualisierung des jeweils anstehenden Montageschritts und eine Datenbank zur Speicherung der Visualisierungsdaten in Verbindung. Da jeder Montageschritt auf dem Display dargestellt wird, kann ein Werker ohne Trainingsphase sofort mit der Montage beginnen. Mit steigender Anzahl der durchgeführten Montagevorgänge wird der Werker die Montageschritte immer besser erlernen und die für die Montageschritte benötigte Zeit wird sich entsprechend verkürzen. Da sich der Werker auch nach einer großen Zahl bereits durchgeführter Montagevorgänge im Zweifelsfall jedes Mal wieder Anregungen von dem Display holen kann, steigt auch die Qualität und Reproduzierbarkeit der Montage an.

Im Normalfall wird es ausreichen, auf dem Display jeweils ein Bild für jeden Montageschritt darzustellen. Bei komplexeren Montageschritten kann es sinnvoll sein, auf dem Display eine Videosequenz zu zeigen. Aber auch das Anzeigen von mehreren Bildern gleichzeitig, beispielsweise vor und nach dem Montageschritt kann eine große Hilfe für den Werker bedeuten. Selbstverständlich ist auch die Darstellung von Bildern und Videosequenzen zu einem Montageschritt möglich.

An dem Montagearbeitsplatz sind Mittel vorgesehen, die einen Montageschritt beenden und zum nächsten Montageschritt weiterschalten oder den Montagevorgang beenden. Auf diese Weise wird immer genau der Montageschritt auf dem Display dargestellt, der gerade durchgeführt wird. Nach dem letzten Montageschritt wird der gesamte Montagevorgang beendet.

In der einfachsten Ausführungsform weisen die Mittel ein Bedienelement auf. Dieses Bedienelement wird von dem Werker an dem Montagearbeitsplatz jeweils von Hand betätigt, sobald er einen Montageschritt abgeschlossen hat. Je nach Montageschritt wird daraufhin der nächste Montageschritt auf dem Display dargestellt, oder aber der Montagevorgang wird beendet.

Erfindungsgemäß stellen die Mittel die Beendigung des Montageschritts jedoch selbstständig fest. Auf diese Weise wird dem Werker die Verantwortung dafür entzogen, die Beendigung des Montageschritts selbst festzustellen. Arbeiten die Mittel mit entsprechender Genauigkeit so ist die Qualität der Montage nicht mehr von der momentanen Verfassung des Werkers abhängig. Die Reproduzierbarkeit lässt sich so immens steigern.

Am Besten lässt sich dies realisieren, wenn das Werkzeug mit der Montagesteuerung in Verbindung steht und an die Montagesteuerung Daten übermittelt. Es spielt dabei keine Rolle, ob die Daten über Kabel, Funk, Infrarot- oder Ultraschallwellen übermittelt werden. Durch diese Datenübermittlung wird es möglich, die momentan erreichten Montageparameter für die Montagesteuerung zugänglich zu machen. Die Montagesteuerung kann so entscheiden, ob der Montageschritt bereits beendet ist und daraufhin zum folgenden Montageschritt wechseln.

Ebenso werden Signale von der Montagesteuerung an das Werkzeug übertragen. In der Datenbank sind vorteilhaft zu jedem Montageschritt Parameter gespeichert. Diese Parameter beziehen sich auf Größen, die bei dem jeweiligen Montageschritt erreicht werden müssen. Das Werkzeug verfügt hierzu über entsprechende Sensoren, die diese Größen aufnehmen können. Die übermittelte Größe wird von der Montagesteuerung mit dem jeweils hinterlegtem Parameter verglichen. Es ist eine Prüfeinrichtung vorgesehen, die das Erreichen der gespeicherten Parameter überprüft. Diese Prüfeinrichtung kann Bestandteil der Montagesteuerung sein.

An das Werkzeug wird ein Stoppsignal geleitet, sobald die vom Werkzeug übermittelte Größe mit dem in der Datenbank hinterlegten Parameter übereinstimmt. Daraufhin stellt die Montagesteuerung die Beendigung des Montageschritts fest. Auch in der Datenbank wird nach dem Erreichen der gespeicherten Parameters der dazugehörige Montageschritt als beendet registriert.

Nach dem Beenden eines Montageschrittes wird zu diesem Montageschritt ein Datensatz in der Datenbank angelegt. Dieser Datensatz beinhaltet die oder den gemessenen Montageparameter. Erfindungsgemäß wird in diesen Datensatz auch die benötigte Montagezeit und ein Hinweis auf den montierenden Werker, z. B. dessen Personalnummer hinterlegt. Es sollte auch noch ein Bezug zwischen diesem Datensatz und der Artikelnummer des montierten Gerätes sowie einer Geräteidentifikationsnummer hergestellt werden.

In einem Ausführungsbeispiel wird als Werkzeug ein programmierbarer Schrauber mit Grenzwerterfassung verwendet. In diesem Fall kann die Prüfeinrichtung, die das Erreichen der gespeicherten Parameter überprüft, in den Schrauber integriert sein. Dies bedeutet, dass von der Montagesteuerung nur der in der Datenbank abgelegte Parameter, in diesem Fall, das bei dem Montageschritt zu erreichende Anzugsdrehmoment, an den Schrauber übermittelt wird. Der Schrauber erfasst das jeweils aktuelle Drehmoment und schaltet bei dem von der Montagesteuerung übermittelten Drehmoment ab. Dabei generiert der Schrauber ein Stoppsignal, welches an die Montagesteuerung geleitet wird. Diese registriert sodann den Montageschritt als beendet und schaltet zum nächsten Montageschritt weiter.

Ist bei dem an dem Montagearbeitsplatz verwendeten Werkzeug keine Messwerterfassung möglich, lässt sich das Beenden des Montageschrittes auch anders feststellen. Dies gilt auch für Montageschritte, bei denen kein Werkzeug verwendet wird. Vorteilhaft ist für solche Fälle eine Kamera vorgesehen. Diese Kamera zeichnet Bilder des Montageschrittes während der Montage auf und vergleicht diese Bilder mit Daten, die zu diesem Montageschritt in der Datenbank hinterlegt sind. Sobald die hinterlegten Daten mit den von der Kamera gelieferten Daten übereinstimmen, gilt der Montageschritt als erfolgreich beendet. Auf diese Weise stellt die Montagesteuerung über die Kamera die Beendigung des Montageschrittes fest. Auch bei Montageschritten mit Werkzeugen, die eine Messwerterfassung erlauben, kann die Kameraüberwachung sinnvoll sein, da sie eine zusätzliche Sicherheit für die Erreichung des Montageschritt-Ziels bedeutet.

Vorteilhaft wird die Montagesteuerung auch für die Bereitstellung des für die Montage benötigten Materials verwendet. Da mit dem Montagearbeitsplatz nicht nur ein Montagevorgang durchgeführt werden soll, müssen die unterschiedlichen Montagevorgänge voneinander unterscheidbar sein. Es ist daher jedem einzelnen Montagevorgang in Verbindung mit der zu montierenden Geräte-Stückzahl eine Kommissionsnummer zugeordnet und in der Datenbank hinterlegt.

Zu jeder Kommissionsnummer sind die für die Montage benötigten Teile in Stücklisten zusammengefasst und in der Datenbank abgespeichert. Dabei ist das Material dem jeweiligen Montageschritt zugeordnet.

Vorteilhafterweise ist für den Montagearbeitsplatz ein Materialwagen vorgesehen, der mit der jeweiligen Kommissionsnummer gekennzeichnet ist. Dieser Materialwagen wird mit dem Material bestückt, welches für die Abarbeitung einer der Montage zugeordneten Kommissionsnummer benötigt wird. Der Werker hat so vor Ort die genaue Anzahl der Teile zur Verfügung, die er für diese Montage benötigt. Dies bedeutet eine zusätzliche Sicherheit, da das Fehlen oder Übrigbleiben eines Teils auf einen Montagefehler schließen lässt.

Um menschliche Fehler bei der Bestückung des Materialwagens und bei der Zuordnung des Materialwagens zu einem Montagearbeitsplatz zu vermeiden, wird zur Kennzeichnung des Materialwagens vorteilhaft anstatt eines von Hand auszufüllenden Zettels ein maschinenlesbarer Code oder ein RFID-Chip verwendet. Einen maschinenlesbaren Code stellt beispielsweise ein Barcode dar, der mit einem Barcode-Scanner eingelesen werden kann. Noch vorteilhafter ist die Verwendung eines RFID-Chips. Hier kann sowohl das Einschreiben als auch das Auslesen der Kennzeichnung automatisch und berührungslos erfolgen.

Um die Effizienz des erfindungsgemäßen Montagearbeitsplatzes weiter zu steigern, können an dem Montagearbeitsplatz mehrere Montageplätze vorgesehen sein, deren Anzahl in der Datenbank zu hinterlegen ist. Auf diese Weise kann von dem Werker mehrere Male hintereinander der gleiche Montageschritt wiederholt werden. Das verkürzt zum einen die Anlernphase und erhöht zum anderen nach der Anlernphase die Montagegeschwindigkeit.

Der Montagearbeitsplatz kann aber nicht nur für eine hocheffiziente Montage verwendet werden, sondern es lässt damit auch gleichzeitig die Montageanleitung erstellen. Hierfür ist - zumindest temporär - eine Kamera vorgesehen, mit der Bilder und/oder Videosequenzen zur Visualisierung der einzelnen Montageschritte aufgezeichnet werden. Diese Kamera ist so mit der Montagesteuerung verbunden, dass die aufgezeichneten Bilder und/oder Videosequenzen sofort in der Datenbank zu dem Montageschritt hinterlegt werden können. Das Bildformat der Kamera wird dabei vorteilhaft genau auf die Auflösung des Displays eingestellt. Hierdurch lässt sich das Verhältnis zwischen Dateigröße und bestmöglicher Darstellung optimieren. Auch wird so eine zusätzliche Nachbearbeitung der mit der Kamera aufgenommenen Daten vermieden. Die Bilder und Videosequenzen werden also direkt den einzelnen Montageschritten zugeordnet und entsprechend in der Datenbank abgelegt. Eine Nachbearbeitung der Montageanleitung erübrigt sich damit.

Manche Geräte müssen an unterschiedlichen Montagearbeitsplätzen montiert werden, da sie spezielle Werkzeuge und Einrichtungen erfordern, die nicht an einem Montagearbeitsplatz unterzubringen sind. Ebenso kommt es vor, dass nach einem Montageschritt, beispielsweise nach der Montage einer elektrischen Baugruppe, erst an einem speziellen Prüfplatz die Funktion der eingebauten elektrischen Komponente getestet werden muss. Erst nach diesem Test kann das Gerät an dem Montagearbeitsplatz fertig montiert werden. Zu diesem Zweck ist eine mobile Montagegrundplatte vorgesehen. Auf dieser mobilen Montagegrundplatte ist das Gerät angeordnet und kann so von dem Montagearbeitsplatz zu der Prüfeinrichtung und wieder zurück transportiert werden. In einer einfachen Ausführung ist die mobile Montagegrundplatte auf einem fahrbaren Gestell angeordnet. Bei einer alternativen Ausführung der Erfindung wird die mobile Montagegrundplatte von einem Transportband zu unterschiedlichen Stationen gebracht.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:
- Fig. 1: eine Pinzipskizze des erfindungsgemäßen Montagearbeitsplatzes,
- Fig. 2: eine Darstellung eines Montagarbeitsplatzes zur parallelen Montage von vier gleichen Geräten,
- Fig. 3: ein Diagramm zur Erstellung einer Montageanleitung,
- Fig. 4: ein Diagramm zur Zusammenstellung des Materials für die Montage und
- Fig. 5: ein Diagramm zum Ablauf der Montage.

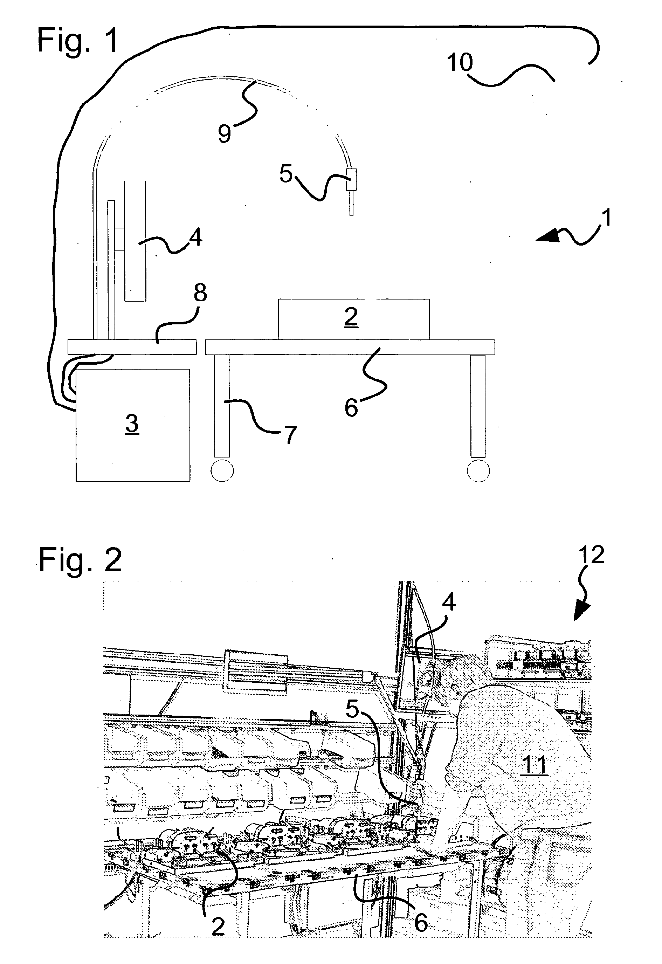

Der in Fig. 1 gezeigte Montagearbeitsplatz für eine Kleinserienfertigung weist eine Anschlussbasis 8 auf, die fest montiert ist und an der alle elektrischen Anschlüsse sowie alle Datenkabel zusammenlaufen. An der Anschlussbasis 8 ist auch der Bildschirm 4 befestigt. Dieser kann fest montiert (s. Fig. 2), aber auch, wie in Fig. 1 gezeigt, als Standgerät ausgeführt sein. Ebenfalls zur Anschlussbasis 8 gehört die Montagesteuerung 3, die hier in einen üblichen Personal Computer (PC) integriert ist. An die Montagesteuerung 3 sind die Datenkabel eines Schraubers 5, des Bildschirms 4 und evtl. einer Kamera 10 angeschlossen. In diesem Ausführungsbeispiel ist eine Anbindung über Kabel gezeigt, aber selbstverständlich ist auch eine kabellose Anbindung, beispielsweise über WLAN möglich.

Weiterhin besitzt die Anschlussbasis 8 einen Werkzeuggalgen 9 mit Kabeln für den elektrischen Anschluss des Schraubers 5 und für die Datenübertragung zwischen dem Schrauber 5 und der Montagesteuerung 3. Die Kamera 10 ist bei dem beschriebenen Ausführungsbeispiel nur für die Erstellung der Montageanweisung notwendig und ist daher nicht fest installiert. Zur Erstellung der Montageanweisung wird die Kamera 10 auf einem Stativ so montiert, dass der Sichtwinkel der Kamera in etwa dem Sichtwinkel eines Werkers entspricht, der bei der Montage auf die zu montierenden Geräte 2 schaut. Auf diese Weise ist gewährleistet, dass auf dem Bildschirm 4 der selbe Ausschnitt des Geräts 2 dargestellt wird, den der montierende Werker vor sich sieht.

Nicht fest mit der Anschlussbasis 8 verbunden ist die Montagegrundplatte 6. Diese ruht auf einem fahrbaren Tischgestell 7. Die Geräte 2 auf der Montagegrundplatte 6 können so in einfacher Weise zu anderen Montagearbeitsplätzen oder zu einer Prüfstation gebracht werden.

Aus der Darstellung in Fig. 2 ist zusätzlich erkennbar, dass mehrere Geräte 2 parallel montiert werden können. Die Montagegrundplatte 6 weist hierzu vier Montageplätze für bis zu vier Geräte auf. Durch die gleichzeitige Montage von vier Geräten kann der Werker 11 viermal hintereinander den gleichen Montageschritt durchführen. Dadurch lässt sich viel Zeit einsparen und die Zuverlässigkeit wird erhöht.

In Fig. 2 ist auch noch ein Materialwagen 12 zu erkennen. Auf diesem Materialwagen wird alles Material zusammengestellt, das für die Montage der vier Geräte 2 benötigt wird.

Auf dem Bildschirm 4 in Fig. 2 sind links am unteren Bildschirmrand vier Kästchen dargestellt. Diese Kästchen sind zu Beginn eines jeden Montageschritts gelb oder rot hinterlegt. Mit Beendigung des Montageschritts bei einem der vier Geräte 2 wird das zugeordnete Kästchen grün hinterlegt. Der Werker 11 weiß so immer genau an welchen Geräten der Montageschritt bereits abgeschlossen ist.

Kleinserien umfassen üblicherweise eine Gerätezahl von 100-1000 Stück pro Jahr. Diese gesamte Losgröße wird dann, abhängig von der Produktwertigkeit, in über das Jahr verteilte Abrufaufträge in der Größe von 50-100 Stück aufgeteilt. Der erfindungsgemäße Montagearbeitplatz ist für soche Auftragsgrößen vorgesehen.

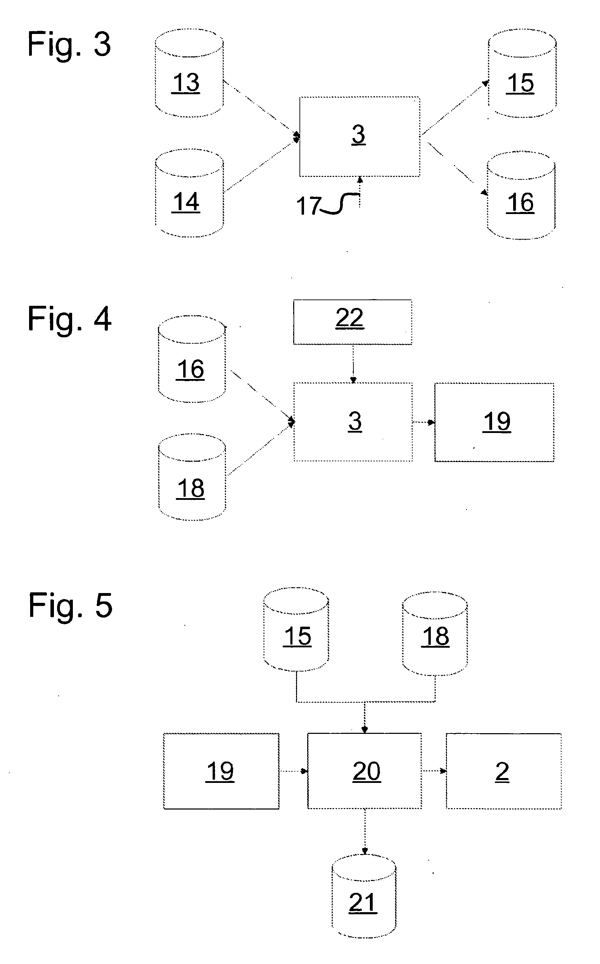

Im Folgenden werden die Vorgänge an dem erfindungsgemäßen Montagearbeitsplatz näher beschrieben:
Wird ein Auftrag erteilt, so muss zuerst eine Montageanleitung 15 (s. Fig. 3) erstellt werden. Es wird eine relationale Datenbank benutzt, in der die Montageanleitung mit Bezug auf das zu montierende Gerät abgespeichert wird. Dieser Montageanleitung 15 werden die einzelnen Montageschritte zugeordnet. In der Datenbank werden ebenfalls die Montageparameter der einzelnen Montageschritte abgespeichert. Im Rahmen der Fertigungssteuerung wird über die Auftragsabwicklung eine Fertigungskommission des Geräts mit den entsprechenden Losgrößen der einzelnen Abrufaufträge erstellt.

Auch die Stücklisten 14 sind einem Gerät zugeordnet und werden bei der Erstellung der Materialliste 16 auf die Montageschritte aufgeteilt. Selbst bei der Erstellung der Materiallisten kann die Montagesteuerung 3 mit einbezogen werden. So ist es z. B. möglich bei einer durchzuführenden Verschraubung die entsprechenden Parameter, wie Festigkeit der Verschraubung, Tiefe der Gewindebohrung u.s.w. in eine Tabelle einzugeben. Die Montagesteuerung entnimmt der Tabelle die passende Schraube und die dazugehörigen Montageparameter wie Anzugsdrehmoment, Drehwinkel oder Umdrehungsanzahl, Drehzahl, und Typ bzw. Größe der Werkzeugklinge oder des Werkzeugeinsatzes. Auch der Toleranzbereich für diese Parameter kann der Tabelle entnommen werden. Sowohl die gefundene Schraube, wie auch die Montageparameter werden dem entsprechenden Montageschritt zugeordnet und abgespeichert.

Die Daten für die Visualisierung des Montageschritts werden mit der Kamera 10 insbesondere einer digitalen Kamera erzeugt. Diese Kamera 10 ist direkt mit der Montagesteuerung 3 über Kabel oder drahtlose Datenübertragung verbunden. Das Bildformat und die Auflösung der Kamera 10 sind genau an das Bildformat und die Auflösung des Bildschirms 4 angepasst. Hierdurch wird mit Speicherplatz ökonomisch umgegangen und man erreicht dennoch die bestmögliche Darstellung. Außerdem erübrigt sich eine Nachbearbeitung der so erzeugten Bilddaten 17. Nach der Aufnahme eines Bildes durch die Kamera 10 kann das Bild sofort auf dem Bildschirm 4 begutachtet werden. Entspricht das Bild nicht den Erwartungen, kann die Aufnahme wiederholt werden und das erste Bild wird überschrieben. Wird das Bild dagegen für gut befunden, wird es per Tastendruck in die Datenbank übernommen und zu dem Montageschritt gehörend abgespeichert. Zusätzlich kann ein Hinweistext eingegeben werden. Vorzugsweise wird der Hinweistext zusammen mit dem Bild auf dem Bildschirm 4 so dargestellt, dass die Bildinformation nicht überlagert wird und sichtbar bleibt.

Für komplexe Montageschritte kann statt eines oder mehrerer Bilder, oder auch zusätzlich eine Videosequenz eingebaut werden. Die Aufnahme der Videosequenz erfolgt in gleicher Weise wie die Aufnahme der Bilder. Auch die Videosequenz wird in Relation zu dem entsprechenden Montageschritt in der Datenbank abgespeichert. Mit geringem Zeitaufwand wird auf diese Weise eine eindeutige und prozesssichere Montageanleitung erstellt.

Jedem Montageschritt ist mindestens der Datensatz mit den Bild- oder Videodaten 17 zugeordnet. Weiterhin nimmt der Montageschritt Bezug auf einen Datensatz mit dem zu montierenden Material. Einigen Montageschritten sind jedoch noch weitere Datensätze, so z. B. Datensätze mit den Montageparametern zugeordnet. Die Montageschritte, die ohne Werkzeug oder mit einem nicht programmierbaren Werkzeug, beispielsweise mit einer Klebepistole durchgeführt werden, weisen keinen Datensatz mit Montageparametern auf. Alle Montageschritte gemeinsam sind in der Datenbank hinterlegt und bilden zusammen die Montageanleitung 15. Die Montageanleitung 15 referenziert wiederum auf ein Gerät und eine Kommissionsnummer.

Bei der Erstellung der Montageanleitung 15 entsteht die Materialliste 16, die für jeden Montageschritt das benötigte Material beinhaltet. Es handelt sich dabei gewissermaßen um die nach Montageschritten sortierte Stückliste 14. Die Materiallist 16 enthält folglich das Material in der Reihenfolge, in der es während der Montage benötigt wird.

Zur Erstellung der Montageanleitung 15 benötigt die Montagesteuerung 3 folglich die Daten über den Artikel 13, also die Daten über die Größe der gesamten Serie, die Größe eines Abrufauftrags, einzuhaltende Termine usw.. Auch die Stückliste 14 wird der Montagesteuerung 3 übermittelt. Während der Erstellung der Montageanleitung 15 werden dann noch die Bilddaten 17 zu den einzelnen Montageschritten eingegeben. Die Montagesteuerung 3 legt in der Datenbank die Montageanleitung 15 und die Materialliste 16 ab.

Idealerweise wird das für die Montage benötigte Material 19 (s. Fig. 4)in einem fahrbaren Materialwagen 12 zusammengestellt. Das für die Montage benötigte Material 19 wird nur in der Menge des aktuellen Abrufauftrags beigestellt. Für den nächsten Abrufauftrag wird der Materialwagen 12 neu bestückt. In dem hier beschriebenen Ausführungsbeispiel wird am Materialwagen 12 ein maschinenlesbares Barcode-Etikett mit der Kommissionsnummer des Montagevorgangs angebracht.

Die Zusammenstellung des für die Montage benötigten Materials 19 im Materialwagen 12 kann wieder durch die Montagesteuerung 3 erfolgen. Sie bedient sich dabei der Auftragsdaten 18 auf die sie über die Kommissionsnummer zugreift. Weiterhin greift sie auf die vorher erstellte Materialliste 16 zurück. Unter Umständen ist sogar eine automatische Entnahme von Lagerware 22 möglich. Sollte dies nicht der Fall sein, wird der Materialwagen 12 von Hand bestückt.

Für die Montage wird der Materialwagen 12 in der Regel seitlich an den Montagearbeitsplatz 1 gebracht. Mit einem hier nicht gezeigten Barcodescanner, der ebenfalls mit der Montagesteuerung 3 in Verbindung steht, wird die Kommissionsnummer des Montagevorgangs aufgenommen. Über diese Kommissionsnummer wird die richtige Montageanleitung 16 und die dazu gehörigen zusätzlichen Informationen aus der Datenbank geladen. Die zusätzlichen Informationen werden über die Fertigungssteuerung bereitgestellt und umfassen die Auftragsdaten 18. Die Auftragsdaten 18 beinhalten die Gesamtzahl des Abrufauftrags und die Anzahl der parallel gleichzeitig zu montierenden Geräte, also die Anzahl der auf der Montagegrundplatte 6 zu nutzenden Montageplätze. Die Anzahl der zu nutzenden Montageplätze wird von der Fertigungsleitung im Rahmen der Arbeitsvorbereitung vorgegeben und ist von der Gerätegeometrie und der Größe der Montagegrundplatte 6 abhängig. Die Anzahl liegt typisch zwischen 3 und 10 und ist maximal so groß wie der zu montierende Abrufauftrag.

Die Montage beginnt damit, dass der Werker 11 zuerst seine Personalnummer eingibt bzw. diese von seinem Firmenausweis mit dem Barcodescanner abtastet. Danach werden die Grundplatten oder Chassis - entsprechenden der Anzahl der zu nutzenden Montageplätze - auf der Montagegrundplatte 6 ausgelegt. Die zu nutzenden Montageplätze werden als einzelne Kästchen am unteren Rand des Bildschirms 4 dargestellt. Damit wird dem Werker 11 zur Kontrolle angezeigt, an welchen Geräten der aktuelle Montageschritt bereits durchgeführt wurde. Die zugeordneten Kästchen werden entsprechend markiert. Der Werker 11 wird dann über den Bildschirm 4 angewiesen, Barcode-Etiketten mit eindeutiger fortlaufender Geräteidentifikationsnummer auf den Chassis entsprechend der auf dem ersten Bild gezeigten Position anzubringen. Dann wird mit dem Barcodescanner von links beginnend jede der Nummern abgetastet. Mit dem erfolgreichen Lesen der Nummer wird auf das nächste Gerät weitergeschaltet und das entsprechende Kästchen am unteren Rand des Bildschirms 4 wird entsprechend markiert.

Nachdem alle auf der Montagegrundplatte 6 liegenden Chassis erfasst wurden, schaltet die Montagesteuerung 3 automatisch auf den ersten Montageschritt. Gleichzeitig werden im Hintergrund neue Datensätze angelegt, deren Referenz die eben erfasste Gerätidentifikationsnummer als Chassis-ID ist. Zu diesen Datensätzen, denen auch die Personalnummer des Werkers 11 zugeordnet ist, werden ab jetzt alle gerätespezifischen Daten 21 erfasst. Insbesondere wird der jeweils zuletzt ausgeführte Montageschritt mit allen Montageparametern aufgezeichnet.

Nach dem Beginn der Montage wird die Montageanleitung in Form von Bildern oder Videosequenzen in der vorher definierten Reihenfolge der Montageschritte auf dem Bildschirm 4 in zentraler Sichtposition des Werkers 11 am Montagearbeitsplatz 1 dargestellt. Bei Montageschritten, bei denen kein Werkzeug oder ein nicht programmierbares Werkzeug verwendet wird, legt der Werker 11 selbst fest, wenn ein Montageschritt an einem Gerät beendet ist und übermittelt diese Entscheidung der Montagesteuerung 3 per Tastendruck. Die Montagesteuerung 3 wiederholt jeden Montageschritt genau so oft, wie Geräte parallel montiert werden.

Beispielhaft sei hier ein Montageschritt erläutert, bei dem der programmierbare Schrauber 5 zu verwenden ist. Der Schrauber 5 wird von der Montagesteuerung 5 mit den in der Datenbank zu diesem Montageschritt hinterlegten Montageparametern programmiert und ist sofort für die entsprechende Verschraubung bereit. Der Werker 11 entnimmt dem Materialwagen 12 die zu befestigenden Teile und setzt diese wie auf dem Bildschirm 4 angezeigt auf die Chassis auf. Nach der Beendigung dieses Montageschrittes betätigt er eine nicht gezeigte Taste, um der Montagesteuerung 3 anzuzeigen, dass dieser Montageschritt beendet ist. Die Montagesteuerung 3 gibt dem Werker 11 in dem in Fig. 2 gezeigten Beispiel viermal das selbe Bild vor und markiert dabei entsprechend dem Montagefortschritt die Kästchen am unteren Rand des Bildschirms 4. Ist auch am vierten Gerät das zu befestigende Teil aufgelegt und die Taste betätigt, schaltet die Montagesteuerung 3 auf den nächsten Montageschritt.

Das zu dem nächsten Montageschritt auf dem Bildschirm 4 dargestellte Bild zeigt den Schrauber 5 mit erfasster Schraube am Einsatzort. Der Werker 11 nimmt aus einem mit der Nummer des Montageschritts gekennzeichneten Kasten auf dem Materialwagen 12 die entsprechende Schraube und setzt sie in den Schrauber 5 ein. Alternativ könnten Standardschrauben aber auch für mehrere Montageschritte in einer Box an dem Montagearbeitsplatz 1 untergebracht sein. Die Boxen mit den Standardschrauben sind beispielsweise mit LEDs ausgerüstet. Wird bei einem Montageschritt eine dieser Standardschrauben benötigt, so steuert die Montagesteuerung 3 die LED an der entsprechenden Box an. Der Werker 11 weiß auf diese Weise, aus welcher Box er die für den Montageschritt benötigte Schraube entnehmen muss. Der Schrauber 5 wird nun mit der Schraube über die Verschraubungsposition gebracht und durch Schubstart ausgelöst.

Entsprechend den programmierten Montageparametern wird der Verschraubungsvorgang ausgeführt und die gemessenen Montagedaten in der Datenbank mit Referenz auf den Montageschritt und die Chassis-ID abgespeichert. Zusätzlich wird noch die für den Montageschritt benötigte Arbeitszeit in der Datenbank abgelegt.

Wenn die Daten innerhalb der erlaubten Toleranz liegen wird auf das nächste Gerät weitergeschaltet. Nach der Durchführung dieses Montageschritts an dem letzten Gerät schaltet die Montagesteuerung 3 auf den nächsten Montageschritt.

In Fig. 3 ist die Montage 20 stark vereinfacht als Diagramm dargestellt. Da Material 19 im Materialwagen 12 wird der Montage 20 zugeführt. Gleichzeitig wird während der Montage auf die Montageanleitung 15 und die Auftragsdaten 18 zurückgegriffen. Letztendlich entsteht bei der Montage 20 das Gerät 2. Dazu werden bei der Montage 20 gerätespezifische Daten 21 erzeugt, die später insbesondere bei der Fehlersuche hilfreich sein können.

Diese Vorgehensweise weist einen weiteren Vorteil auf. Im Fall einer fehlerhaften Verschraubung außerhalb des zugelassenen Toleranzbereichs kann der Vorgang wiederholt werden. Sollte jedoch eine Beschädigung vorliegen, z: B. wenn das Gewinde ausgerissen ist, wird das Gerät temporär zur Nacharbeit ausgesondert. Dies wird wiederum durch die Betätigung einer hier nicht gezeigten Taste durch den Werker 11 angestoßen. Da in der Datenbank der letzte erfolgreiche Montageschritt mit den dazugehörigen produktspezifischen Daten 21 aufgezeichnet wurde, kann auch später an diesem Gerät weitergearbeitet werden.

Da die Montagegrundplatte 6 auf einem fahrbaren Tischgestell 7 aufliegt, kann die Montage jederzeit unterbrochen bzw. abgebrochen werden. Dies ist wichtig, wenn z.B. elektrische Prüfungen an anderen Prüfplätzen durchgeführt oder andere Geräte vorgezogen werden müssen. In diesen Fällen wird die Montage aller Geräte auf der Montagegrundplatte 6 unterbrochen und die gesamte Montagegrundplatte 6 zusammen mit dem fahrbaren Tischgestell 7 ausgetauscht. Falls auf eine andere Kommissionsnummer umgestellt wird, kommt auch noch der Materialwagen 12 zum Austausch.

Die Montage teilmontierter Geräte wird fortgesetzt, indem die Chasis-ID mit dem Barcodescanner eingelesen wird. Die Montagesteuerung 3 schaltet automatisch auf die richtige Kommissionsnummer, die richtige Montageanweisung und den richtigen Montageschritt. Somit können unterbrochene Arbeiten einfach fortgesetzt werden. Dies ist möglich, weil die Datenstrukturen entsprechend angelegt sind.

### Bezugszeichenliste:

- 1: Montagearbeitsplatz
- 2: zu montierendes Gerät
- 3: Montagesteuerung
- 4: Bildschirm
- 5: Schrauber
- 6: Montagegrundplatte
- 7: fahrbares Tischgestell
- 8: Anschlussbasis
- 9: Werkzeuggalgen
- 10: Kamera
- 11: Werker
- 12: Materialwagen
- 13: Artikel
- 14: Stückliste
- 15: Montageanleitung
- 16: Materialliste
- 17: Bilddaten
- 18: Auftragsdaten
- 19: Material im Materialwagen
- 20: Montage
- 21: gerätespezifische Daten
- 22: Lagerware

## Patentansprüche

1. Montagearbeitsplatz (1) für eine Kleinserienfertigung zum Durchführen eines Montagevorgangs mit wenigstens einem Montageschritt, der mit einer Montagesteuerung (3) verbunden ist, mit wenigstens einem Werkzeug (5), wobei mit der Montagesteuerung (3) ein Display (4) zur Visualisierung des jeweils anstehenden Montageschritts und eine Datenbank zur Speicherung der Visualisierungs-Daten (17) in Verbindung stehen, wobei Mittel vorgesehen sind, die selbstständig die Beendigung des Montageschritts feststellen und zum nächsten Montageschritt weiterschalten oder den Montagevorgang beenden, **dadurch gekennzeichnet, dass** nach der Beendigung eines Montageschritts zu diesem Montageschritt ein Datensatz (21) in der Datenbank angelegt wird, indem wenigstens ein Hinweis auf den montierenden Werker und ein Bezug auf eine Geräteidentifikationsnummer hinterlegt ist.

2. Montagearbeitsplatz nach Anspruch 1, **dadurch gekennzeichnet, dass** zur Visualisierung Bilder und/oder Viedeosequenzen zu den Montageschritten auf dem Display (4) dargestellt sind.

3. Montagearbeitsplatz nach Anspruch 2, **dadurch gekennzeichnet, dass** Mittel vorgesehen sind, die einen Montageschritt beenden.

4. Montagearbeitsplatz nach Anspruch 3, **dadurch gekennzeichnet, dass** die Mittel ein Bedienelement aufweisen.

5. Montagearbeitsplatz nach Anspruch 4, **dadurch gekennzeichnet, dass** das Werkzeug (5) mit der Montagesteuerung (3) in Verbindung steht und an diese Daten übermittelt.

6. Montagearbeitsplatz nach Anspruch 5, **dadurch gekennzeichnet, dass** in der Datenbank Parameter zu jedem Montageschritt gespeichert sind und von der Montagesteuerung (3) Signale an das Werkzeug (5) übertragen werden.

7. Montagearbeitsplatz nach Anspruch 6, **dadurch gekennzeichnet, dass** eine Prüfeinrichtung vorgesehen ist, die das Erreichen der gespeicherten Parameter überprüft.

8. Montagearbeitsplatz nach Anspruch 7, **dadurch gekennzeichnet, dass** nach dem Erreichen der gespeicherten Parameter der dazugehörige Montageschritt als beendet registriert wird.

9. Montagearbeitsplatz nach Anspruch 8, **dadurch gekennzeichnet, dass** als Werkzeug ein programmierbarer Schrauber (5) mit Grenzwerterfassung verwendet wird.

10. Montagearbeitsplatz nach Anspruch 1, **dadurch gekennzeichnet, dass** eine Kamera (10) vorgesehen ist.

11. Montagearbeitsplatz nach Anspruch 10, **dadurch gekennzeichnet, dass** die Montagesteuerung (3) über die Kamera (10) die Beendigung eines Montageschritts feststellt.

12. Montagearbeitsplatz nach Anspruch 2, **dadurch gekennzeichnet, dass** für jeden Montagevorgang eine Kommissionsnummer in der Datenbank hinterlegt ist.

13. Montagearbeitsplatz nach Anspruch 12, **dadurch gekennzeichnet, dass** in der Datenbank das zu jedem Montageschritt benötigte Material hinterlegt ist.

14. Montagearbeitsplatz nach Anspruch 13, **dadurch gekennzeichnet, dass** ein Materialwagen (12) vorgesehen ist, der mit der jeweiligen Kommissionsnummer **gekennzeichnet** ist.

15. Montagearbeitsplatz nach Anspruch 14, **dadurch gekennzeichnet, dass** zur Kennzeichnung ein maschinenlesbarer Code oder ein RFID-Chip verwendet wird.

16. Montagearbeitsplatz nach Anspruch 2, **dadurch gekennzeichnet, dass** mehrere Montageplätze vorgesehen sind, deren Anzahl in der Datenbank hinterlegt ist.

17. Montagearbeitsplatz nach Anspruch 2, **dadurch gekennzeichnet, dass** eine Kamera (10) vorgesehen ist, mit der Bilder und/oder Videosequenzen zur Visualisierung der einzelnen Montageschritte aufgezeichnet werden.

18. Montagearbeitsplatz nach Anspruch 9, **dadurch gekennzeichnet, dass** Bilder und/oder Videosequenzen den einzelnen Montageschritten zugeordnet und in der Datenbank abgelegt werden.

19. Montagearbeitsplatz nach Anspruch 2, **dadurch gekennzeichnet, dass** eine mobile Montagegrundplatte (6) vorgesehen ist.

## Claims

1. An assembly station (1) for small batch production for carrying out an assembly process comprising at least one assembly step, in communication with an assembly controller (3), with at least one tool (5), wherein a display (4) for visualizing each current assembly step and a database for storing the visualizing data (17) are connected to the assembly controller (3), wherein means are provided that automatically determine the end of the assembly step and switch over to the next assembly step or terminate the assembly process, **characterized in that**, after terminating an assembly step, a data record (21) for this assembly step is created in the database, in which at least an indication of the assembling workman and a reference to a machine identification number are stored.

2. The assembly station according to claim 1, **characterized in that**, for visualizing, images and/or video sequences referring to the assembly steps are shown on the display (4).

3. The assembly station according to claim 2, **characterized in that** means are provided for terminating an assembly step.

4. The assembly station according to claim 3, **characterized in that** the means comprise an operating element.

5. The assembly station according to claim 4, **characterized in that** the tool (5) is in communication with the assembly controller (3) and transmits data to the latter.

6. The assembly station according to claim 5, **characterized in that** the parameters referring to each assembly step are stored in the database, and signals are transmitted from the assembly controller (3) to the tool (5).

7. The assembly station according to claim 6, **characterized in that** a testing apparatus is provided to check whether the stored parameters have been achieved.

8. The assembly station according to claim 7, **characterized in that**, once the stored parameters have been achieved, the associated assembly step is registered as terminated.

9. The assembly station according to claim 8, **characterized in that** a programmable screwdriver (5) with limit value detection is used as the tool.

10. The assembly station according to claim 1, **characterized in that** a camera (10) is provided.

11. The assembly station according to claim 10, **characterized in that** the assembly controller (3) determines the end of an assembly step with the aid of the camera (10).

12. The assembly station according to claim 2, **characterized in that** a batch number for each assembly process is stored in the database.

13. The assembly station according to claim 12, **characterized in that** the material needed for each assembly step is stored in the database.

14. The assembly station according to claim 13, **characterized in that** a material cart (12) is provided that is identified by the respective batch number.

15. The assembly station according to claim 14, **characterized in that** a machine-readable code or an RFID chip is provided for identification.

16. The assembly station according to claim 2, **characterized in that** a plurality of assembly stations is provided, the number of which is stored in the database.

17. The assembly station according to claim 2, **characterized in that** a camera (10) is provided for recording images and/or video sequences for visualizing the individual assembly steps.

18. The assembly station according to claim 9, **characterized in that** images and/or video sequences are associated with the individual assembly steps and stored in the database.

19. The assembly station according to claim 2, **characterized in that** a mobile assembly table (6) is provided.

## Revendications

1. Poste de montage (1) pour une fabrication en petites séries afin d'exécuter un processus de montage avec au moins une étape de montage, qui est reliée à une commande de montage (3), avec au moins un outil (5), dans lequel un écran (4) destiné à visualiser l'étape de montage en attente et une banque de données destinée à enregistrer les données de visualisation (17) sont en lien avec la commande de montage (3), dans lequel des moyens sont prévus qui constatent de façon autonome la fin de l'étape de montage et avancent à l'étape de montage suivante ou mettent fin au processus de montage, **caractérisé en ce qu'**après la fin d'une étape de montage à cette étape de montage un ensemble de données (21) est placé dans la banque de données, alors qu'au moins une information est transmise à l'ouvrier monteur ainsi qu'une référence à un numéro d'identification d'appareil.

2. Poste de montage selon la revendication 1, **caractérisé en ce que** pour la visualisation des images et/ou des séquences vidéo concernant les étapes de montage sont représentées sur l'écran (4).

3. Poste de montage selon la revendication 2, **caractérisé en ce que** des moyens sont prévus qui mettent fin à une étape de montage.

4. Poste de montage selon la revendication 3, **caractérisé en ce que** les moyens présentent un élément d'utilisation.

5. Poste de montage selon la revendication 4, **caractérisé en ce que** l'outil (5) est en lien avec la commande de montage (3) et est transmis à ces données.

6. Poste de montage selon la revendication 5, **caractérisé en ce que** des paramètres sont enregistrés dans la banque de données à chaque étape de montage et des signaux sont transmis de la commande de montage (3) à l'outil (5).

7. Poste de montage selon la revendication 6, **caractérisé en ce qu'**un dispositif d'essai est prévu qui vérifie l'obtention des paramètres enregistrés.

8. Poste de montage selon la revendication 7, **caractérisé en ce qu'**après l'obtention des paramètres enregistrés, l'étape de montage correspondante est enregistrée comme terminée.

9. Poste de montage selon la revendication 8, **caractérisé en ce qu'**une machine à visser programmable (5) avec détection des valeurs limites est utilisée comme outil.

10. Poste de montage selon la revendication 1, **caractérisé en ce qu'**un appareil photographique (10) est prévu.

11. Poste de montage selon la revendication 10, **caractérisé en ce que** la commande de montage (3) constate au moyen de l'appareil photographique (10) la fin d'une étape de montage.

12. Poste de montage selon la revendication 2, **caractérisé en ce que** pour chaque processus de montage un numéro de commission est placé dans la banque de données.

13. Poste de montage selon la revendication 12, **caractérisé en ce que** dans la banque de données est placé un matériau nécessaire à chaque étape de montage.

14. Poste de montage selon la revendication 13, **caractérisé en ce qu'**un chariot de matériau (12) est prévu qui est identifié avec le numéro de commission respectif.

15. Poste de montage selon la revendication 14, **caractérisé en ce que** pour l'identification un code lisible par une machine ou une puce d'identification par radio-fréquence est utilisé(e).

16. Poste de montage selon la revendication 2, **caractérisé en ce que** plusieurs postes de montage sont prévus, dont le nombre est mémorisé dans la banque de données.

17. Poste de montage selon la revendication 2, **caractérisé en ce qu'**un appareil photographique (10) est prévu, avec lequel des images et/ou des séquences vidéo pour la visualisation des différentes étapes de montage sont enregistrées.

18. Poste de montage selon la revendication 9, **caractérisé en ce que** des images et/ou des séquences vidéo sont associée(s) aux différentes étapes de montage et sont classées dans la banque de données.

19. Poste de montage selon la revendication 2, **caractérisé en ce qu'**une plaque de montage mobile (6) est prévue.
